Europäisches Patentamt

European Patent Office

Office européen des brevets

(11) Veröffentlichungsnummer: **0 194 630**
**A2**

# EUROPÄISCHE PATENTANMELDUNG

(21) Anmeldenummer: 86103165.6

(22) Anmeldetag: 10.03.86

(51) Int. Cl.⁴: **G06K 9/20**

(30) Priorität: 14.03.85 DE 3509241

(43) Veröffentlichungstag der Anmeldung:
**17.09.86 Patentblatt 86/38**

(84) Benannte Vertragsstaaten:
**AT BE CH DE FR GB IT LI NL SE**

(71) Anmelder: **Traub AG**
**Ulmer Strasse 49-55**
**D-7313 Reichenbach/Fils(DE)**

(72) Erfinder: **Kögel, Goetz**
**Wartbergstrasse 5**
**D-7000 Stuttgart 1(DE)**

(74) Vertreter: **Wuesthoff, Franz, Dr.-Ing. et al**
**Patentanwälte Wuesthoff -v.**
**Pechmann-Behrens-Goetz Schweigerstrasse 2**
**D-8000 München 90(DE)**

(54) Verfahren zum optischen Bestimmen und/oder Lokalisieren eines Objektes.

(57) Zum optischen Bestimmen, Lokalisieren und/oder isolierten Darstellen eines Objektes in einer vorgegebenen Umgebung wird mittels einer Kamera ein elektronisch speicherbares Abbild der Umgebung mit dem Objekt erzeugt, welches mit einem Abbild der Umgebung ohne das Objekt verglichen wird.

FIG. 1a

EP 0 194 630 A2

## Verfahren zum optischen Bestimmen und/oder Lokalisieren eines Objektes

Die Erfindung betrifft ein Verfahren zum optischen Bestimmen, isolierten Darstellen und/oder Lokalisieren zumindest eines Objektes in einer vorgegebenen Umgebung, bei dem mittels einer Kamera ein elektronisch speicherbares Abbild des Objektes und der Umgebung erzeugt wird.

In Transport-und Handhabungsvorrichtungen werden häufig mittels einer Zuführvorrichtung Objekte an einen bestimmten Ort gebracht, wo sie von einer Abführeinrichtung aufgenommen und zu einem anderen Ort transportiert werden. Objekte können dabei Gegenstände der verschiedensten Art sein, wie beispielsweise Werkstücke, Werkzeuge oder zu sortierende oder zu verpackende Waren. Bei Werkstücken oder Werkzeugen wird die vorgegebene Umgebung beispielsweise durch die Werkzeugmaschine gebildet, in welcher sie lokalisiert werden sollen.

Der Erfindung liegt die Aufgabe zugrunde, ein Verfahren zum optischen Bestimmen, isolierten Darstellen und/oder Lokalisieren von Objekten in einer vorgegebenen Umgebung zu schaffen, welches ohne Berührung der Objekte vollautomatisch durchgeführt werden kann.

Erfindungsgemäß wird diese Aufgabe dadurch gelöst, daß mittels einer Kamera ein elektronisch speicherbares Abbild der Umgebung ohne das Objekt erzeugt und gespeichert wird, worauf ein Abbild der Umgebung mit dem Objekt erzeugt und elektronisch gespeichert wird, welches sodann mit dem zuvor gespeicherten Abbild der Umgebung ohne das Objekt verglichen wird.

Der Begriff Abbild soll dabei sehr allgemein verstanden werden. Das Abbild kann auf einem beliebigen Informationsträger gebildet werden, welcher einen Vergleich verschiedener Abbilder zuläßt. Beispielsweise kann mittels einer Fernseh-Kamera ein Bild erzeugt werden, welches sodann elektronisch auf einem Magnetband oder dergleichen aufgezeichnet wird. Im Sinne der Erfindung soll die Aufzeichnung auf dem Informationsträger, wie dem Magnetband, als Abbild verstanden werden. Auch kann das Abbild mittels einer Video-Kamera mit Festkörper-Bildsensor erzeugt werden. Dabei werden in den Photodioden des Festkörper-Bildsensors durch das einfallende Licht unmittelbar Ladungen erzeugt, welche zeilenweise ausgelesen werden und auf einer Ausgangsleitung direkt ein Video-Signal erzeugen, das sich auf einer üblichen Video-Kassette speichern läßt. Die auf der Kassette gespeicherte Information, welche dem aufgenommenen Bild entspricht, soll im Sinne der Erfindung ebenfalls als Abbild aufgefaßt werden.

Unter dem Begriff Umgebung ist der Hintergrund zu verstehen, vor dem das Objekt abgebildet wird. Es versteht sich, daß die Umgebung eine optische Struktur aufweist, also nicht aus einer einfarbigen Fläche gleichmäßiger Helligkeit besteht.

Die Erfindung ermöglicht

a) die Erzeugung eines isolierten Abbildes des Objektes, also eine Darstellung des Objektes ohne Umgebung,

b) eine Bestimmung der Art des Objektes, beispielsweise hinsichtlich seiner Abmessungen wenn Objekte mit verschiedenen Abmessungen vorkommen, und

c) eine Lokalisierung des Objektes in der Umgebung, d.h. eine Bestimmung der Lage des Objektes im Bezug auf die Umgebung, welche durch beliebige Fixpunkte in derselben definiert ist.

Die vorstehenden Zwecke a) -c) können sowohl einzeln als auch in Kombination erreicht werden.

Wird gemäß einer bevorzugten Ausgestaltung des erfindungsgemäßen Verfahrens die Differenz aus dem Abbild der Umgebung mit dem Objekt und dem Abbild der Umgebung ohne das Objekt gebildet, so ergibt sich eine Darstellung des Objektes ohne die Umgebung. Das so erhaltene Objekt kann dann beispielsweise hinsichtlich seiner Abmessungen mit anderen Objekten, deren Abbilder zuvor gespeichert worden sind, verglichen werden, so daß eine Bestimmung des Objektes durchgeführt werden kann.

Eine Lokalisierung des Objektes im Bezug auf die vorgegebene Umgebung wird dadurch erreicht, daß bei dem Vergleich der Abbilder der Umgebung mit und ohne Objekt letzteres in bezug zu bestimmten, fest vorgegebenen Bezugspunkten der Umgebung gesetzt wird.

In einer bevorzugten Ausgestaltung der Erfindung ist vorgesehen, daß die Umgebung derart optisch strukturiert wird, daß sie gegenüber den zu bestimmenden, zu lokalisierenden oder isoliert darzustellenden Objekten einen maximalen optischen Kontrast aufweist. Diese Strukturierung der Umgebung ist insofern möglich, als die Objekte im voraus jedenfalls grob bekannt sind.

Besonder geeignet für die Durchführung des erfindungsgemäßen Verfahrens ist eine Video-Kamera mit Festkörper-Bildsensor, welcher mittels bekannter Schaltungen digital vergleichbare Abbilder erzeugt.

Um reproduzierbare Meßergebnisse zu erhalten, sind die Umgebung und die Kamera zueinander ortsfest ausgerichtet.

Es ist denkbar, daß das Verfahren in einer Umgebung durchgeführt wird, deren Lichtverhältnisse sich allmählich ändern, beispielsweise im Laufe eines Tages. Auch können sich die Lichtverhältnisse durch Änderungen des Blendeneinstellung der Kamera oder durch Änderungen des automatischen Verstärkungsfaktors bei einer elektronischen Kamera ergeben. Um dieser Änderung Rechnung zu tragen, wird in einer besonderen Ausgestaltung des erfindungsgemäßen Verfahrens die Umgebung bei unterschiedlichen Lichtverhältnissen mehrfach abgebildet und die Abbilder werden gespeichert, so daß ein Mittelwert-Abbild gebildet werden kann, welches sodann als dasjenige Abbild herangezogen wird, mit dem das Abbild der Umgebung mit Objekt verglichen wird.

Bei einer anderen Ausgestaltung der Erfindung werden veränderliche Lichtverhältnisse dadurch kompensiert, daß in zeitlichen Abständen, die so gewählt sind, daß die Änderungen der Lichtverhältnisse erfaßt werden, Abbilder der objektlosen Umgebung aufgenommen werden. Das beim Vergleich heranzuziehende Referenzbild wird aus einem gewichteten Mittelwert aus dem alten Referenzbild und der neuen Aufnahme gebildet. Die Wichtung wird dabei in Abhängigkeit vom Zeitintervall zwischen den Aufnahmen gewählt.

In einer weiteren Fortentwicklung des erfindungsgemäßen Verfahrens wird der Möglichkeit sich ändernder Lichtverhältnisse in der Umgebung dadurch Rechnung getragen, daß eine Normierung der Helligkeitswerte vorgenommen wird. Hierzu ist in der Umgebung ein Referenz-Bereich vorgesehen, der nicht durch ein Objekt abdeckbar ist und dessen Helligkeit bei Abbildern der Umgebung mit und ohne Objekt miteinander verglichen wird. Bei identischen Lichtverhältnissen müßte die Helligkeit dieses Referenz-Bereiches jeweils gleich sein. Bei geänderten Lichtverhältnissen ist sie unterschiedlich. In diesem Falle kann eines der Abbilder, also entweder das Abbild mit oder das Abbild ohne Objekt, derart verstärkt oder geschwächt werden, daß die Helligkeiten des Referenz-Bereiches in beiden Abbildern übereinstimmen.

Nachfolgend ist das erfindungsgemäße Verfahren anhand der Zeichnung näher erläutert. Dabei zeigt:

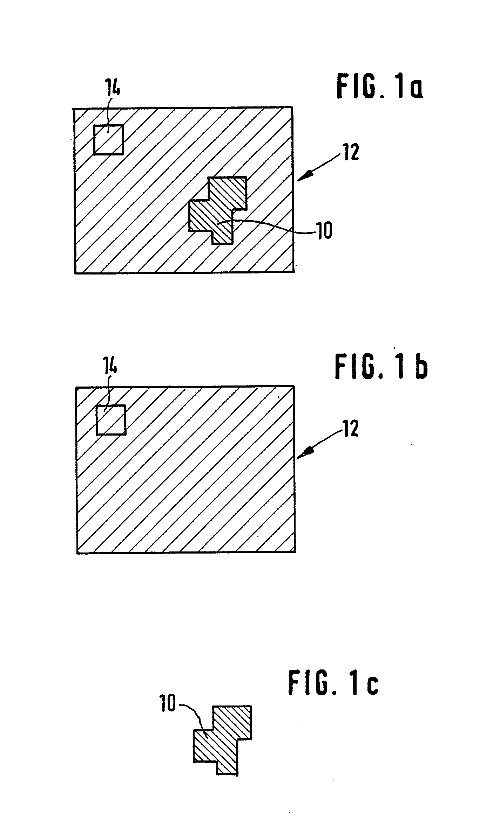

Fig. 1a die Umgebung mit einem Objekt;

Fig. 1b die Umgebung ohne Objekt und

Fig. 1c das Objekt.

Gemäß Fig. 1a ist ein Objekt 10 in einer Umgebung 12 plaziert. Von der Umgebung 12 mitsamt dem Objekt 10 wird eine Abbildung mittels einer Video-Kamera mit Festkörper-Bildsensor erzeugt und in einem Rechner gespeichert.

Zuvor ist eine Abbildung der Umgebung 12 ohne das Objekt 10 in gleicher Weise erzeugt und in dem Rechner gespeichert worden. Wird das gemäß Fig. 1b aufgezeichnete Abbild der Umgebung 12 ohne das Objekt von der gemäß Fig. 1a aufgezeichneten Umgebung 12 mit dem Objekt 10 subtrahiert, so ergibt sich eine isolierte Darstellung des Objektes 10 gemäß Fig. 1c.

Das derart gebildete isolierte Objekt 10 läßt sich mit anderen Objekten, welche in dem Speicher des Rechners abgespeichert sind, vergleichen, um es hinsichtlich interessierender Eigenschaften, wie beispielsweise seiner Abmessungen oder auch seiner Farbe, zu bestimmen.

Das erfindungsgemäße Verfahren läßt sich z.B. bei zwei Fertigungsanlagen einsetzen, die aufeinanderfolgende Bearbeitungen an Werkstücken ausführen. Die beiden Fertigungsanlagen sind jeweils mit Handhabungseinrichtungen versehen, welche Zugriff auf eine gemeinsame Transporteinrichtung für die zu bearbeitenden Teile haben. Die Transporteinrichtung besteht z.B. aus einem Förderband, welches Teileträger mitführt. Die Teileträger sind an bestimmten Stellen anzuhalten, um die Übernahme und Übergabe der Teile durch die Handhabungseinrichtung zu ermöglichen. Erreicht ein Träger die Übergabestation, so wird die Transporteinrichtung gestoppt, was sich beispielsweise durch opto-elektronische oder mechanische Hilfsmittel durchführen läßt.

Über der Übergabestation ist eine Kamera angeordnet, so daß Abbildungen der Teileträger mit den darauf angeordneten Teilen aufgenommen werden können. In einem Speicher sind Abbildungen der Umgebung ohne das Objekt (hier das Teil) abgelegt. Diese Abbildung enthält z.B. Ausschnitte der Transporteinrichtung und den leeren Teileträger.

Sobald die Transporteinrichtung an der Übergabestation gestoppt wird, nimmt die Kamera ein Abbild der Umgebung mit dem Objekt (hier das Teil) auf. Gemäß dem vorstehend beschriebenen Verfahren wird ein Abbild des Objektes (Teiles) gewonnen, welches dann für eine weitere Verarbeitung zur Verfügung steht. Beispeilsweise kann festgestellt werden, welche Lage das Teil in bezug auf den Träger einnimmt. Dementsprechend kann dann die Handhabungseinrichtung mit einem Programm gesteuert werden, in welchem die Lage des Teiles berücksichtigt ist. Für jede denkbare Lage des Teiles ist innerhalb der Handhabungstoleranzen der Anordnung ein entsprechendes Programm vorgesehen. Somit kann die Handhabungseinrichtung das Teil von der Transporteinrichtung auf die Fertigungsanlage überführen, obwohl das Teil möglicherweise unterschiedliche Positionen auf der Transporteinrichtung einnimmt.

## Ansprüche

1. Verfahren zum optischen Bestimmen, isolierten Darstellen und/oder Lokalisieren zumindest eines Objektes (10) in einer vorgegebenen Umgebung (12), bei dem mittels einer Kamera ein elektronisch speicherbares Abbild des Objektes und der Umgebung erzeugt wird,

dadurch **gekennzeichnet,**

daß

a) zumindest ein Abbild der Umgebung (12) ohne das Objekt (10) gespeichert wird,

b) ein Abbild der Umgebung (12) mit dem Objekt (10) gespeichert wird, und daß

c) die gemäß den Verfahrensschritten (a) und (b) gespeicherten Abbilder miteinander verglichen werden.

2. Verfahren nach Anspruch 1,

dadurch **gekennzeichnet,**

daß im Verfahrensschritt (c) die Differenz aus dem Abbild der Umgebung (12) mit dem Objekt (10) und dem Abbild der Umgebung ohne das Objekt gebildet wird.

3. Verfahren nach einem der Ansprüche 1 oder 2,

dadurch **gekennzeichnet,**

daß die Umgebung (12) derart optisch strukturiert wird, daß sie gegenüber den Objekten (10) einen maximalen optischen Kontrast aufweist.

4. Verfahren nach einem der vorhergehenden Ansprüche, dadurch **gekennzeichnet,**

daß als Kamera eine Video-Kamera mit einem Festkörper-Bildsensor eingesetzt wird.

5. Verfahren nach einem der vorhergehenden Ansprüche, dadurch **gekennzeichnet,**

daß die Umgebung (12) in bezug auf die Kamera ortsfest ist.

6. Verfahren nach Anspruch 2,

dadurch **gekennzeichnet,** daß die Differenz (c) mit unterschiedlichen vorgespeicherten Objektabbildern verglichen wird.

7. Verfahren nach einem der vorhergehenden Ansprüche,

dadurch **gekennzeichnet,**

mehrere Abbilder der Umgebung (12) ohne Objekt bei unterschiedlichen Lichtverhältnissen gespeichert werden, aus denen ein Mittelwert-Abbild gebildet wird, welches im Verfahrensschritt (c) mit dem Abbild der Umgebung mit dem Objekt verglichen wird.

8. Verfahren nach einem der Ansprüche 1-6,

dadurch **gekennzeichnet,**

daß im Verfahrensschritt a) mehrere Abbilder der Umgebung (12) ohne Objekt zu mehreren vorgegebenen Zeitpunkten aufgenommen und gespeichert werden und daß aus diesen Abbildern ein Referenzbild für den Vergleich gemäß Verfahrensschritt c) derart gewonnen wird, daß ein Mittelwert aus den Abbildern gebildet wird, wobei jedes Abbild entsprechend seinem Zeitpunkt gewichtet wird.

9. Verfahren nach einem der vorhergehenden Ansprüche, dadurch **gekennzeichnet,**

daß in der Umgebung (12) ein Referenz-Bereich (14) vorgesehen ist, der nicht durch ein Objekt (10) abgedeckt wird und dessen Helligkeit bei Abbildern der Umgebung mit dem Objekt (10) und ohne Objekt miteinander verglichen wird, und daß vor dem Vergleich gemäß Verfahrensschritt (c) eines der Abbilder so verstärkt oder geschwächt wird, daß die Helligkeiten des Referenz-Bereiches (14) übereinstimmen.

**FIG. 1a**

14

12

10

**FIG. 1b**

14

12

**FIG. 1c**

10